# EUROPÄISCHE PATENTSCHRIFT

(11) **EP 2 413 538 B1**
(45) Veröffentlichungstag und Bekanntmachung des Hinweises auf die Patenterteilung: **13.03.2013**
(21) Anmeldenummer: 10008005.0
(22) Anmeldetag: 30.07.2010
(51) Int. Cl.: H04L 12/437

(54) **Vermeidung von Sendeschleifen in einem redundanten Ringnetzwerk**
Prevention of transmission loops in a redundant ring network
Prévention de boucles de transmission dans un réseau en anneau redondant

(43) Veröffentlichungstag der Anmeldung: 01.02.2012
(73) Patentinhaber: Siemens Aktiengesellschaft, 80333 München (DE)
(72) Erfinder: Götz, Franz-Josef, 91180 Heideck (DE); Klotz, Dieter, 90768 Fürth (DE); Lohmeyer, Joachim, 91161 Hilpoltstein (DE)

(56) Entgegenhaltungen:
- US-A1- 2006 215 544
- US-A1- 2009 016 384
- US-A1- 2009 268 610

## Beschreibung

Die Erfindung betrifft die redundante Kommunikation in einem Kommunikationssystem, insbesondere die redundante Kommunikation in einem Kommunikationssystem mit mehreren Kommunikationsnetzwerken. Ein Verfahren entsprechend dem Oberbegriff des Patentanspruchs 1 ist aus US 2006/215544 A1 bekannt.

In US 2009/016384 A1 ist ein Verfahren zur Verteilung von synchronisierten Statusmeldungen innerhalb eines Resilient-Packet-Ringnetzes beschrieben, bei dem Datenpakete mit Timing-Informationen durch Codieren von Synchronization-Status-Messaging-Nachrichten in OAM-Datenpakete entsprechend IEEE 802.3ah erzeugt werden. Informationen mit Angaben zu einer Senderichtung einer jeweiligen Nachricht werden ebenfalls in die OAM-Datenpakete codiert. Für Datenpakete mit synchronization-Status-Messaging-Informationen werden Resilient-Packet-Ring-Schutzmechanismen deaktiviert. Diese Datenpakete werden entsprechend den Informationen zur Senderichtung an benachbarte Netzknoten übermittelt.

Ein Netzwerk wird hier insbesondere als ein Zusammenschluss mehrerer Netzwerkgeräte verstanden, die drahtlos oder über Netzwerkkabel miteinander kommunizieren können. Bei einem Kommunikationssystem mit mehreren Kommunikationsnetzwerken sind die Kommunikationsnetzwerke miteinander über sogenannte Kopplungsknoten verbunden. Die Kopplungsknoten dienen dazu, dass Daten von einem ersten Kommunikationsnetzwerk in ein zweites und umgekehrt übertragen werden können. Eine kommunikationsnetzwerkübergreifende Kommunikation ist also in einem solchen Kommunikationssystem möglich.

Eine redundante Kommunikation in einem solchen Kommunikationssystem ist von Vorteil, da so Unterbrechungen des Kommunikationswegs nicht automatisch bedeuten, dass die Kommunikation nicht stattfinden kann. Bei einer Verwendung eines zweiten Kommunikationswegs kann dieser als Alternative zum ersten Kommunikationsweg dienen, falls der erste Kommunikationsweg unterbrochen ist. Diese Art der Kommunikation wird vor allem in Automatisierungsnetzwerken angewandt, wo Automatisierungsdaten, die für einen Produktionsprozess wichtig sind, verwendet werden.

Eine solche redundante Kommunikation kann zum Beispiel dadurch erfolgen, dass ein Signal, das von einem ersten Netzwerkgerät eines ersten Kommunikationsnetzwerk zu einem zweiten Netzwerkgerät eines zweiten Kommunikationsnetzwerks übertragen werden soll, an einen Kopplungsknoten, der das erste Kommunikationsnetzwerk mit dem zweiten Kommunikationsnetzwerk verbindet, sowohl an ein Netzwerkgerät des ersten Kommunikationsnetzwerks als auch an einen weiteren Kopplungsknoten im zweiten Kommunikationsnetzwerk ausgegeben wird. Das Signal wird also sowohl im ersten als auch im zweiten Kommunikationsnetzwerk übertragen. Das über das erste Kommunikationsnetzwerk weiter übertragene Signal wird dann an einen weiteren Kopplungsknoten an einen weiteren Kopplungsknoten des zweiten Kommunikationsnetzwerks übertragen. Auf diese Weise entstehen zwei unterschiedliche Netzwerkpfade vom ersten Netzwerkgerät des ersten Netzwerks zum zweiten Netzwerkgerät des zweiten Kommunikationsnetzwerks.

Der Erfindung liegt demgegenüber die Aufgabe zugrunde, ein verbessertes Verfahren zur redundanten Kommunikation in einem Kommunikationssystem zu schaffen. Außerdem liegt der Erfindung die Aufgabe zugrunde, einen verbesserten Kopplungsknoten, ein verbessertes computerlesbares Speichermedium für einen solchen Kopplungsknoten und ein verbessertes Kommunikationssystem mit einem solchen Kopplungsknoten zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen gegeben.

Erfindungsgemäß wird ein Verfahren zur redundanten Kommunikation in einem Kommunikationssystem geschaffen. Das Kommunikationssystem umfasst dabei mehrere Kommunikationsnetzwerke. Die Kommunikationsnetzwerke sind über zumindest einen Kopplungsknoten miteinander verbunden. Die Kommunikationsnetzwerke umfassen mehrere Netzwerkgeräte.

Innerhalb des Kommunikationssystems werden Daten von einem ersten Netzwerkgerät des ersten Kommunikationsnetzwerks zu einem zweiten Netzwerkgerät des zweiten Kommunikationsnetzwerks über zumindest einen Kopplungsknoten und/oder von dem ersten Netzwerkgerät zu einem dritten Netzwerkgerät des ersten Kommunikationsnetzwerks übertragen. Die Übertragung vom ersten zum zweiten Netzwerkgerät und/oder die Übertragung vom ersten zum dritten Netzwerkgerät erfolgt über zumindest zwei redundante Übertragungswege. Zwei redundante Übertragungswege bedeuten hier, dass innerhalb des Kommunikationsnetzwerks zwei unterschiedliche Wege vom ersten zum zweiten und/oder vom ersten zum dritten Netzwerkgerät für die Übertragung der Daten benutzt werden. Falls einer der beiden Übertragungswege fehlerhaft oder unterbrochen sein sollte, erreichen die Daten ihr Ziel über den jeweils anderen Übertragungsweg.

Aufgrund einer vor der Übertragung vordefinierten Information wird eine Rückübertragung der Daten vom zweiten zum ersten Kommunikationsnetzwerk bei einer Übertragung vom ersten zum zweiten Netzwerkgerät verhindert. Die vordefinierte Information besteht aus einem ersten Teil und einem zweiten Teil. Die Daten umfassen den ersten Teil der vordefinierten Information und der Kopplungsknoten umfasst den zweiten Teil der vordefinierten Information.

Eine solche Verhinderung der Rückübertragung der Daten vom zweiten zum ersten Kommunikationsnetzwerk ist vorteilhaft, da so vermieden wird, dass Daten unnötigerweise wieder zurück in das erste Kommunikationsnetzwerk übertragen werden. Da das Ziel der Daten im zweiten Kommunikationsnetzwerk liegt, ist es vorteilhaft, eine Rückübertragung der Daten in das erste Kommunikationsnetzwerk zu verhindern. So wird vermieden, dass Daten im ersten Netzwerk kreisen, ohne dass dies einen redundanten Übertragungsweg zum zweiten Netzwerkgerät bildet. Die Verhinderung ist also vorteilhaft, um unnötigen Datenverkehr im ersten Netzwerk zu verhindern.

Durch Verhinderung der Rückübertragung wird außerdem der maximal mögliche Laufzeitunterschied zwischen einem Frame der Daten und seinem Duplikat, das über den zweiten redundanten Übertragungsweg übertragen wurde, verringert. Solche Duplikate, die zweimal an einem Kopplungsknoten oder an einem Netzwerkgerät registriert wurden, werden mit einer Duplikatefilter-Liste gefiltert. Durch die Verringerung des maximal möglichen Laufzeitunterschieds können Duplikate mit einer kleineren Duplikatefilter-Liste zuverlässig gefiltert werden.

Besonders vorteilhaft ist dies bei Automatisierungsystemen, die mehrere Automatisierungsnetzwerke umfassen.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-I0-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach Ausführungsformen der Erfindung wird der erste Teil der vordefinierten Information von dem zumindest einem Kopplungsknoten gelesen. Der Kopplungsknoten kennt dann also beide Teile der vordefinierten Information. Der erste Teil wurde vom Kopplungsknoten aus den Daten ausgelesen und der zweite Teil befindet sich im Kopplungsknoten, zum Beispiel auf einem digitalen Speichermedium, und kann vom Kopplungsknoten ebenfalls ausgelesen werden.

Der erste Teil der vordefinierten Information ist nach Ausführungsformen der Erfindung eine Quelladresse der Daten. Die Quelladresse der Daten ist die Adresse des Netzwerkgeräts, das die Daten ausgesendet hat. Dies kann beispielsweise eine Medium Access Control (MAC) Adresse sein. Die Quelladresse identifiziert eindeutig das Netzwerkgerät.

In diesem Fall befindet sich der zweite Teil der vordefinierten Information in einer Datenbank des Kopplungsknotens. Jeder Eintrag der Datenbank umfasst eine Netzwerkgeräteadresse und zumindest ein Forward Control (FWC) Bit. Mit dem zumindest einen FWC-Bit ist einstellbar, dass Daten zum Beispiel nur vom ersten zum zweiten Netzwerk, aber nicht vom zweiten zum ersten Netzwerk gesendet werden dürfen. Mit dem zumindest einen FWC-Bit wird festgelegt, über welche Ports der Kopplungsknoten die empfangenen Daten weiterleitet.

Wenn Daten mit einer bestimmten Quelladresse von dem Kopplungsknoten empfangen werden, ermittelt der Kopplungsknoten in der Datenbank durch Vergleichen der Quelladresse mit den Datenbankeinträgen die zweite vordefinierte Information. Die zweite vordefinierte Information kann zum Beispiel das zumindest eine FWC-Bit sein, das festlegt, ob die empfangenen Daten an das erste und/oder an das zweite Netzwerk weitergeleitet werden.

Nach Ausführungsformen der Erfindung umfasst der Kopplungsknoten mehrere Ports. Über jeden der Ports können Daten empfangen und gesendet werden. Der zweite Teil der vordefinierten Information befindet sich in einer Datenbank. Die Datenbank umfasst mehrere Einträge.

Zunächst werden Daten an einem ersten Port empfangen. Aus diesen Daten wird der erste Teil der vordefinierten Information ausgelesen. Der zweite Teil der vordefinierten Information wird durch Vergleich der Datenbankeinträge mit dem ersten Teil der vordefinierten Information ermittelt. Aus dem zweiten Teil der vordefinierten Information wird zumindest ein zweiter Port zur Weiterleitung der Daten ermittelt, falls der zweite Teil der vordefinierten Information zumindest einen zweiten Port umfasst. Die Daten werden dann über den zumindest einen zweiten Port weitergeleitet, falls der zweite Teil der vorliegenden Information zumindest einen zweiten Port umfasst. Falls der zweite Teil der vordefinierten Information keinen zweiten Port umfasst, wird eine Weiterleitung der Daten verhindert.

Der Kopplungsknoten ermittelt also den zweiten Teil der vordefinierten Information mit Hilfe des ersten Teils der vordefinierten Information. Der zweite Teil der vordefinierten Information gibt an, ob und wenn ja, wie viele und welche Ports zur Weiterleitung der Daten verwendet werden sollen. Somit lässt sich durch den ersten und ersten zweiten Teil der vordefinierten Information die Weiterleitungsrichtung der Daten festlegen. Beispielsweise könnte der erste Teil und der zweite Teil der vordefinierten Information festlegen, dass die Daten nur über den Port weitergeleitet werden, der mit dem ersten Netzwerk verbunden ist. So wird eine Übertragung der Daten in das zweite Netzwerk verhindert. Das gleiche Verfahren kann auch angewandt werden, um eine Übertragung der Daten vom zweiten zum ersten Kommunikationsnetzwerk zu verhindern.

Nach Ausführungsformen der Erfindung umfasst der Kopplungsknoten mehrere Ports. Über jeden der Ports können Daten empfangen und gesendet werden. Der zweite Teil der vordefinierten Information besteht aus einer Datenbank. Die Datenbank umfasst mehrere Einträge, wobei jeder Eintrag für jeden der Ports keinen oder zumindest einen dazugehörigen Sendeport umfasst.

Der erste Teil der vordefinierten Information umfasst ein Datenziel. Dies kann beispielsweise eine Multicast- oder Unicast-Adresse der Daten sein. Der erste Teil der vordefinierten Information legt also das Netzwerkgerät fest, zu dem die Daten übermittelt werden sollen.

Am Kopplungsknoten werden die Daten zunächst an einem ersten Port empfangen. Der Kopplungsknoten liest dann das Datenziel aus und registriert den ersten Port als Empfangsport. In der Datenbank wird dann nach dem Datenbankeintrag gesucht, der mit dem Datenziel und dem ersten Port übereinstimmt. Jeder Datenbankeintrag umfasst außerdem keinen oder zumindest einen Sendeport. Der jeweilige Sendeport wird also durch den ersten Port und das Datenziel bestimmt. Es ist auch möglich, dass für einen ersten Port und ein bestimmtes Datenziel kein Sendeport definiert ist. In diesem Fall werden die Daten nicht weitergeleitet.

Aus der Datenbank wird der zumindest eine, zu dem ersten Port zugehörige Sendeport ausgelesen, falls der Datenbankeintrag zumindest einen Sendeport umfasst. Die Daten werden über den zumindest einen ausgelesenen Sendeport weitergeleitet, falls der Datenbankeintrag zumindest einen Sendeport umfasst. Falls der Datenbankeintrag keinen Sendeport umfasst, wird eine Weiterleitung der Daten verhindert.

Mit anderen Worten ermittelt der Kopplungsknoten aus dem Datenziel und dem Empfangsport, ob und über welchen oder welche Ports die Daten weitergeleitet werden sollen.

Nach Ausführungsformen der Erfindung ist jeder Datenbankeintrag und das Datenziel durch eine Multicast-Adresse oder eine Unicast-Adresse charakterisiert.

Nach Ausführungsformen der Erfindung ist das Kommunikationssystem ein Automatisierungssystem. Die Daten sind in diesem Fall Automatisierungsdaten. Ein solches Automatisierungssystem ist besonders vorteilhaft, da unnötige Datenübertragungen im ersten Netzwerk verhindert werden. Somit werden eventuelle Verzögerungen bei Übertragung von anderen Daten im ersten Kommunikationsnetzwerk verhindert. Somit wird ein reibungsloser Produktionsprozess mit Hilfe des Automatisierungssystems gewährleistet.

In einem weiteren Aspekt betrifft die Erfindung einen Kopplungsknoten mit mehreren Ports. Die Ports sind dazu ausgebildet, zumindest ein erstes Kommunikationsnetzwerk eines Kommunikationssystems mit einem zweiten Kommunikationsnetzwerk des Kommunikationssystems zu verbinden. Jeder Port ist an ein Kommunikationsnetzwerk angeschlossen. Beispielsweise können zwei Ports des Kopplungsknotens an ein erstes Kommunikationsnetzwerk und zwei Ports des Kopplungsknotens an ein zweites Kommunikationsnetzwerk angeschlossen sein. Somit kann der Kopplungsknoten Daten innerhalb des ersten Kommunikationsnetzwerks oder innerhalb des zweiten Kommunikationsnetzwerks weiterleiten. Auch eine Weiterleitung von Daten vom ersten Kommunikationsnetzwerk zum zweiten Kommunikationsnetzwerk und umgekehrt kann erfolgen.

Über die Ports können Daten aus dem ersten und dem zweiten Kommunikationsnetzwerk empfangen und an das erste und das zweite Kommunikationsnetzwerk ausgesendet werden. Der Kopplungsknoten umfasst Mittel zum Auslesen eines ersten Teils einer vordefinierten Information aus den Daten. Der Kopplungsknoten umfasst ferner Speichermittel und Auslesemittel zum Speichern und Auslesen eines zweiten Teils der vordefinierten Information. Vorzugsweise wird der zweite Teil der vordefinierten Information auf einem digitalen Speichermedium in dem Kopplungsknoten gespeichert.

Außerdem umfasst der Kopplungsknoten Verhinderungsmittel. Die Verhinderungsmittel sind dazu ausgebildet, in Abhängigkeit von der vordefinierten Information eine Übertragung von empfangenen Daten, die ursprünglich aus dem ersten Kommunikationsnetzwerk stammen und am Kopplungsknoten vom zweiten Kommunikationsnetzwerk empfangen wurden, zurück in das erste Kommunikationsnetzwerk zu verhindern.

In noch einem weiteren Aspekt betrifft die Erfindung ein Computer lesbares Speichermedium mit Instruktionen, die bei Ausführung in einem Kopplungsknoten nach Ausführungsformen der Erfindung in einem Kommunikationssystem den Kopplungsknoten zur Ausführung des folgenden Verfahrens veranlassen.

Zunächst werden Daten über einen ersten Port empfangen. Der erste Port wird als Empfangsport registriert. Ein erster Teil einer vordefinierten Information wird aus den empfangenen Daten ausgelesen. Ein zweiter Teil der vordefinierten Information wird aus den Speichermitteln des Kopplungsknotens ausgelesen. Eine Übertragung der empfangenen Daten, die ursprünglich aus dem ersten Kommunikationsnetzwerk stammen und am Kopplungsknoten vom zweiten Kommunikationsnetzwerk empfangen wurden, zurück in das erste Kommunikationsnetzwerk wird aufgrund der vordefinierten Information verhindert.

In noch einem weiteren Aspekt betrifft die Erfindung ein Kommunikationssystem mit zumindest einem Kopplungsknoten nach Ausführungsformen der Erfindung. Das Kommunikationssystem umfasst zumindest ein erstes und ein zweites Kommunikationsnetzwerk. Der zumindest eine Kopplungsknoten umfasst mehrere Ports, wobei der Kopplungsknoten über die Ports zumindest das erste Kommunikationsnetzwerk mit dem zweiten Kommunikationsnetzwerk des Kommunikationssystems verbindet.

Im Weiteren werden Ausführungsformen der Erfindung mit Bezugnahme auf die Zeichnungen näher erläutert. Es zeigen:
- Figur 1: eine schematische Darstellung eines Eintrags in einer Datenbank des Kopplungsknotens mit FWC-Bits;
- Figur 2: eine schematische Darstellung eines Kopplungsknotens mit vier Ports, über die Daten empfangen und gesendet werden können, wobei die Weiterleitung von Daten an bestimmte Ports durch bestimmte Forward-Controlling-Bits verhindert wird;
- Figur 3: eine schematische Darstellung eines Eintrags in einer Datenbank im Kopplungsknoten, bei dem einem ersten Port ein zu dem ersten Port zugehöriger Empfangsport zugeordnet wird;
- Figur 4: eine schematische Darstellung eines Kommunikations-systems mit zwei Kommunikationsnetzwerken, die über Kopplungsknoten miteinander verbunden sind, wobei die Datenübertragung vom zweiten zum ersten Netzwerk verhindert wird.
- Figur 5: eine schematische Darstellung eines Kommunikations-systems mit zwei Kommunikationsnetzwerken, die über Kopplungsknoten miteinander verbunden sind, wobei die Datenübermittlung vom ersten zum zweiten Netzwerk verhindert wird;
- Figur 6: ein Kommunikationssystem mit zwei Kommunikations-netzwerken, die über Kopplungsknoten miteinander verbunden sind, wobei ein Kommunikationsnetzwerk girlandenförmig aufgebaut und ein Kommunikations-netzwerk ringförmig aufgebaut ist;
- Figur 7: ein Kommunikationssystem mit zwei Kommunikations-netzwerken mit redundanter Kommunikation eines Senders in dem girlandenförmigen Netzwerk;
- Figur 8: eine schematische Darstellung eines Kommunikations-systems mit zwei Kommunikationsnetzwerken mit einem Datensender im ringförmigen Netzwerk und einer redundanten Kommunikation; und
- Figur 9: ein Blockdiagramm eines Kopplungsknotens.

Elemente der nachfolgenden Figuren, die einander entsprechen, sind mit denselben Bezugszeichen gekennzeichnet.

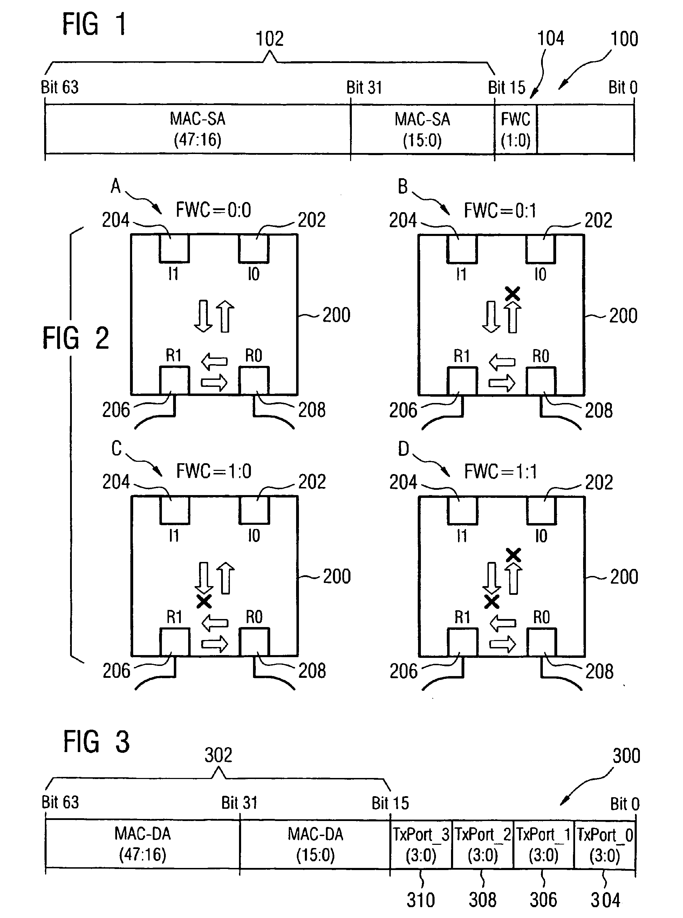

Figur 1 ist eine schematische Darstellung eines Eintrags 100 in einer Datenbank eines Kopplungsknotens. Der Kopplungsknoten verbindet zwei Kommunikationsnetzwerke (hier nicht dargestellt). Jeder Datenbankeintrag dieser Datenbank wird mit einem ersten Teil einer vordefinierten Information von zu übertragenden Daten verglichen. Der erste Teil der vordefinierten Information ist nach Ausführungsformen der Erfindung die Quelladresse der Daten. Die Quelladresse der Daten ist die Adresse des Netzwerkgeräts, das die Daten ausgesendet hat. Die Quelladresse der Daten kann beispielsweise eine Media Access Control (MAC) Quelladresse sein. Die MAC-Quelladresse kann auch als MAC-SA bezeichnet werden. Diese Abkürzung steht für MAC-Source-Address. Der Datenbankeintrag 100 umfasst 64 Bits, wobei die Nummerierung von 0 bis 63 läuft. Eine MAC-SA 102 ist in den Bits 16 - 63 des Datenbankeintrags 100 hinterlegt. Außerdem umfasst der Datenbankeintrag 100 zwei Forward Control (FWC) Bits 104. Die FWC-Bits sind die Bits 14 und 15 des Datenbankeintrags 100. Es können auch mehr FWC-Bits oder auch nur ein FWC-Bit verwendet werden. Die FWC-Bits bilden einen zweiten Teil der vordefinierten Information.

Wenn nun am Kopplungsknoten Daten empfangen werden, liest der Kopplungsknoten die erste vordefinierte Information aus den Daten aus. Die erste vordefinierte Information ist die MAC-SA der Daten. Dann vergleicht der Kopplungsknoten diese MAC-SA der Daten mit den Einträgen in der Datenbank. Falls die MAC-SA der Daten mit der MAC-SA 102 eines Eintrags in der Datenbank übereinstimmen, liest der Kopplungsknoten die FWC-Bits 104 des Datenbankeintrags aus und leitet die Daten mit Hilfe der FWC-Bits weiter.

Figur 2 umfasst vier schematische Darstellungen eines Kopplungsknotens 200 und verdeutlicht die Weiterleitung von Daten, wenn die zweite vordefinierte Information ausgelesen wurde. In Abhängigkeit der ausgelesenen zweiten vordefinierten Informationen, den FWC-Bits, werden die Daten unterschiedlich weitergeleitet. Der Kopplungsknoten 200 umfasst vier Ports 202, 204, 206, 208.

In Teil A von Figur 2 hat der Kopplungsknoten 200 die FWC-Bits 0:0 ausgelesen. In diesem Fall leitet der Kopplungsknoten 200 die Daten an jeden seiner vier Ports 202, 204, 206, 208 weiter. Die Daten werden in diesem Fall über jeden Port wieder ausgegeben.

Der Kopplungsknoten 200 kann sich beispielsweise in einem ersten Kommunikationsnetzwerk befinden. Über Port 204 können Daten aus einem zweiten Automatisierungsnetzwerk empfangen werden. Über Port 202 können Daten an das zweite Kommunikationsnetzwerk ausgegeben werden. Die Ports 206 und 208 dienen jeweils zum Empfang und zum Übertragen von Daten aus dem ersten und zum ersten Kommunikationsnetzwerk.

Teil B von Figur 2 ist eine schematische Ansicht eines Kopplungsknotens 200 wie aus Teil A. Der Unterschied zum Teil A besteht darin, dass aus der Datenbank die FWC-Bits 0:1 ausgelesen wurden. Die FWC-Bits 0:1 veranlassen den Kopplungsknoten 200 dazu, keine Daten über Port 202 auszusenden. Es wird also eine Übertragung der Daten an das zweite Kommunikationsnetzwerk verhindert.

Teil C ist eine schematische Ansicht eines Kopplungsknotens 200 wie aus den Teilen A und B. Hier nun hat der Kopplungsknoten die FWC-Bits 1:0 ausgelesen. Diese FWC-Bits veranlassen den Kopplungsknoten dazu, dass Daten, die über den Port 204 vom zweiten Netzwerk empfangen wurden, nicht an das erste Netzwerk ausgegeben werden. Dies kann zum Beispiel für solche Daten der Fall sein, die nicht an das erste Kommunikationsnetzwerk übertragen werden sollen.

Teil D ist eine schematische Darstellung eines Kopplungsknotens 200 wie in den Teilen A-C, mit dem Unterschied, dass der Kopplungsknoten 200 die FWC-Bits 1:1 ausgelesen hat. In einem solchen Fall wird sowohl verhindert, dass die Daten vom ersten in das zweite Netzwerk als auch vom zweiten in das erste Netzwerk übertragen werden. Es ist nur eine Übertragung vom Port 206 zum Port 208 oder andersrum möglich. Es wird also sowohl die Übertragung von Daten von dem ersten in das zweite Netzwerk als auch umgekehrt verhindert.

Dieses Verfahren kann auch als quelladressabhängiges Weiterleiten der Daten bezeichnet werden.

Figur 3 ist eine schematische Ansicht eines Datenbankeintrags 300 in einem Kopplungsknoten in einem Kommunikationssystem. Der Datenbankeintrag 300 umfasst im Gegensatz zum Datenbankeintrag der Figur 1 eine Zieladresse (MAC-DA) 302. Die MAC-DA 300 hat das gleiche Format wie die MAC-SA aus Figur 1. Die Zieladresse 302 bezeichnet ein Datenziel. Die MAC-DA 302 entspricht der MAC-Adresse eines Netzwerkgeräts. Außerdem umfasst der Datenbankeintrag 300 in den Bits 0 bis 15 vier Einträge 304, 306, 308, 310, in denen für die Zieladresse 302 für jeden potenziellen Empfangsport des Kopplungsknotens ein Sendeport festgelegt ist. Die Einträge 304-310 können daher auch als Festlegungsbits bezeichnet werden.

Der Datenbankeintrag 300 legt also für Daten mit der Zieladresse 302 fest, über welchen Port die Daten ausgesendet werden sollen, wenn sie an einem bestimmten Port empfangen werden. Festlegungsbits 304 legen beispielsweise für einen Empfang der Daten an einem ersten Port den dazugehörigen Sendeport fest, während Festlegungsbits 306 den Sendeport für den Empfang der Daten an einem zweiten Empfangsport festlegen. Entsprechendes gilt für Festlegungsbits 308 und 310 für einen dritten und einen vierten Empfangsport. Es wird also für jeden potenziellen Empfangsport einer oder mehrere Sendeports festgelegt. Die Festlegungsbits 304 - 310 können ebenfalls für einen Empfangsport festlegen, dass die Daten nicht weiter übertragen werden. In diesem Falle umfasst der Datenbankeintrag 300 für das Datenziel 302 mit dem entsprechenden Empfangsport keinen dazugehörigen Sendeport.

Dieses Verfahren kann auch als zieladressabhängige Weiterleitung der Daten bezeichnet werden.

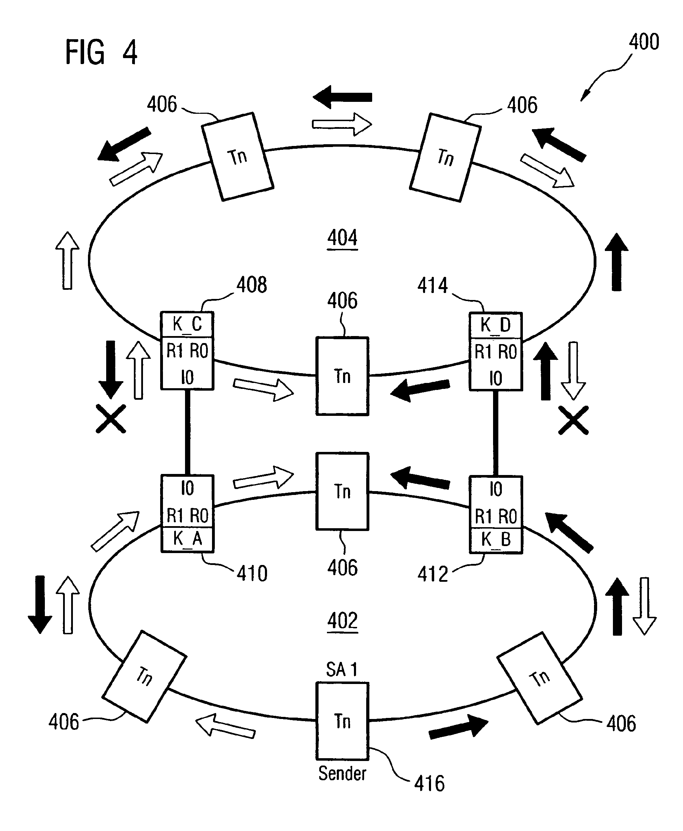

Figur 4 ist eine schematische Ansicht eines Kommunikationssystems 400 mit einem ersten Kommunikationsnetzwerk 402 und einem zweiten Kommunikationsnetzwerk 404. Das erste Kommunikationsnetzwerk 402 ist mit dem zweiten Kommunikationsnetzwerk 404 mittels vierer Kopplungsknoten 408, 410, 412, 414 verbunden. Die Kopplungsknoten 408 und 410 bilden eine Verbindung des ersten Kommunikationsnetzwerks 402 mit dem zweiten Kommunikationsnetzwerk 404 an einer ersten Stelle und die Kopplungsknoten 412 und 414 bilden die Verbindung des ersten Kommunikationsnetzwerks 402 mit dem zweiten Kommunikationsnetzwerk 404 an einer zweiten Stelle. Das erste und zweite Kommunikationsnetzwerk 402 und 404 umfassen jeweils mehrere Netzwerkgeräte 406.

Die Daten werden von einem Sender 416 im ersten Kommunikationsnetzwerk 402 ausgesendet. Das Kommunikationsnetzwerk 402 ist hier ringförmig dargestellt. Es ist aber zu beachten, dass auch andere Netzwerkgeometrien möglich sind. In der ringförmigen Struktur des ersten Kommunikationsnetzwerks 402 überträgt der Sender 416 die Daten sowohl an seinen rechten und linken Nachbarn in der Ringstruktur.

Das Aussenden der Daten in zwei verschiedene Richtungen soll zwei redundante Übertragungswege zum Ziel der Daten sicherstellen. Die Daten erreichen sowohl den Kopplungsknoten 410 als auch den Kopplungsknoten 412. Aufgrund der Quelladresse des Senders werden die Daten von den Kopplungsknoten 410 und 412 an das zweite Kommunikationsnetzwerk 404 weitergeleitet. Alternativ kann eine solche Weiterleitung aufgrund der Zieladresse der Daten erfolgen. Die Entscheidung, ob Daten an das zweite Kommunikationsnetzwerk 404 weitergeleitet werden, wird aufgrund der vordefinierten Information getroffen. Die vordefinierte Information besteht aus einem ersten und einem zweiten Teil. Der erste Teil ist die Quelladresse der Daten oder die Zieladresse der Daten. Der zweite Teil der Information befindet sich im Kopplungsknoten. Der zweite Teil der Information wird aus einer Datenbank ausgelesen.

Nachdem die Daten vom Kopplungsknoten 412 zum Kopplungsknoten 414 und vom Kopplungsknoten 410 zum Kopplungsknoten 408 übertragen wurden, werden die Daten weiterhin über zwei redundante Übertragungswege durch das zweite Kommunikationsnetzwerk 404 übertragen. Eine Rückübertragung von den Kopplungsknoten 408 und 414 zu den Kopplungsknoten 410 und 412 findet aufgrund der vordefinierten Information nicht statt.

Die Verhinderung der Rückübertragung der Daten zu den Kopplungsknoten 410 und 412 kann entweder durch die Zieladresse oder die Quelladresse der Daten festgelegt sein. Beispielsweise wird eine Übertragung vom zweiten Netzwerk 404 zum ersten Netzwerk 402 verhindert, wenn die Quelladresse in den Datenbanken der Kopplungsknoten 408 und 414 mit zumindest einem FWC-Bit verbunden ist, das eine Übertragung zum ersten Kommunikationsnetzwerk 402 verhindert. Alternativ kann die Übertragung durch Festlegungsbits - wie in Figur 3 beschrieben - verhindert werden.

Bei einer Verhinderung der Übertragung durch die FWC-Bits wären beispielsweise für die Quelladresse der Daten im Kopplungsknoten 410 die FWC-Bits 00 hinterlegt, was eine Übertragung in das zweite Kommunikationsnetzwerk 404 erlaubt. In der Datenbank des Kopplungsknotens 412 sind ebenfalls die FWC-Bits 00 hinterlegt. In den Kopplungsknoten 408 und 414 des zweiten Kommunikationsnetzwerks 404 sind die FWC-Bits 01 mit der Quelladresse der Daten in der Datenbank verbunden. Dies verhindert eine Übertragung in das erste Kommunikationsnetzwerk 402.

Bei der Verhinderung der Datenübertragung mittels der Zieladresse, wie in Figur 3 beschrieben, wird im Kopplungsknoten 410 und im Kopplungsknoten 412, die Übertragung der Daten an das zweite Kommunikationsnetzwerk 404 erlaubt. In den Kopplungsknoten 408 und 414 wird eine Übertragung der Daten in das erste Kommunikationsnetzwerk 402 verhindert.

Eine solche Konfiguration der Kopplungsknoten ist vorteilhaft, um eine Rückübertragung der Daten in das erste Kommunikationsnetzwerk zu verhindern.

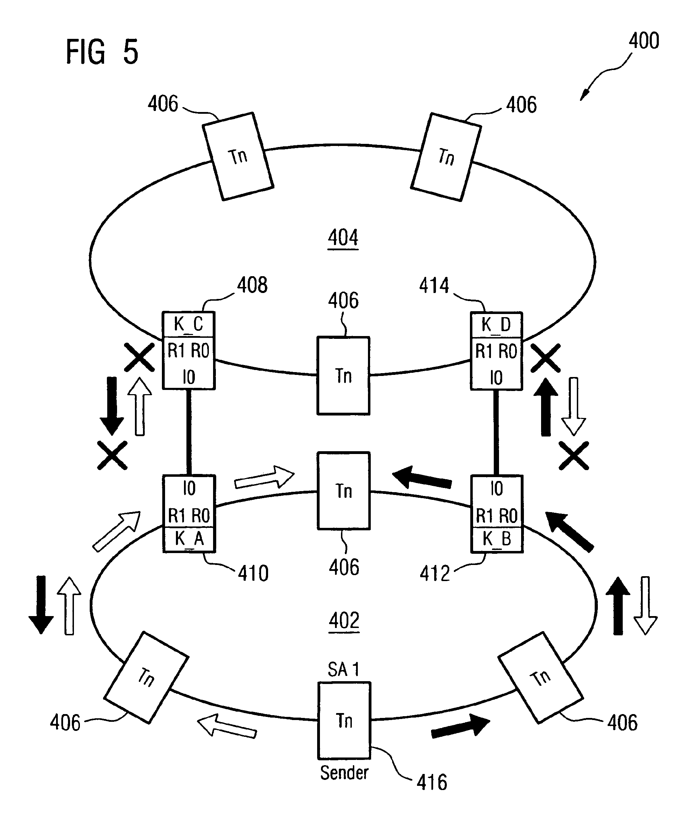

Figur 5 ist eine schematische Darstellung eines Kommunikationssystems 400 mit einem ersten Kommunikationsnetzwerk 402 und einem zweiten Kommunikationsnetzwerk 404.

Die Kommunikationsnetzwerke 402 und 404 sind ähnlich wie in Figur 4 aufgebaut. Der Sender 416 übermittelt wiederum Daten zu zwei Netzwerkgeräten 406 des ersten Kommunikationsnetzwerks 402. In den Kopplungsknoten 410 und 412 wird eine Datenübertragung in das zweite Kommunikationsnetzwerk 404 verhindert. Die Verhinderung kann beispielsweise durch FWC-Bits erfolgen. Für die Quelladresse des Senders 416 sind hierfür in den Datenbanken der Kopplungsknoten 410 und 412 FWC-Bits 00 hinterlegt, die eine Übertragung der Daten in das zweite Kommunikationsnetzwerk 404 erlauben. Allerdings sind für die Quelladresse des Senders 416 in den Kopplungsknoten 408 und 414 die FWC-Bits 11 hinterlegt, die eine Weiterleitung der Daten innerhalb des zweiten Kommunikationsnetzwerks 404 nicht erlauben. Die Daten vom Sender 416 werden also vom Kopplungsknoten 410 zum Kopplungsknoten 408 und vom Kopplungsknoten 412 zum Kopplungsknoten 414 übertragen. Die Kopplungsknoten 408 und 414 übertragen die Daten allerdings nicht weiter, sodass unnötiger Datenverkehr im zweiten Kommunikationsnetzwerk 404 vermieden wird.

Alternativ kann die Verhinderung der Datenübertragung durch den Vergleich der Zieladresse der Daten mit der Datenbank in den Kopplungsknoten 408 - 414 erfolgen. Um eine Datenübertragung vom ersten Kommunikationsnetzwerk 402 zum zweiten Kommunikationsnetzwerk 404 zu unterbinden, wird in den Kopplungsknoten 408 und 414 für empfangene Daten mit dieser Zieladresse in der Datenbank definiert, dass solche Daten nicht über die an das zweite Kommunikationsnetzwerk 404 angeschlossenen Ports weitergeleitet werden. Somit werden unnötige Datenübertragungen im zweiten Kommunikationsnetzwerk 404 verhindert.

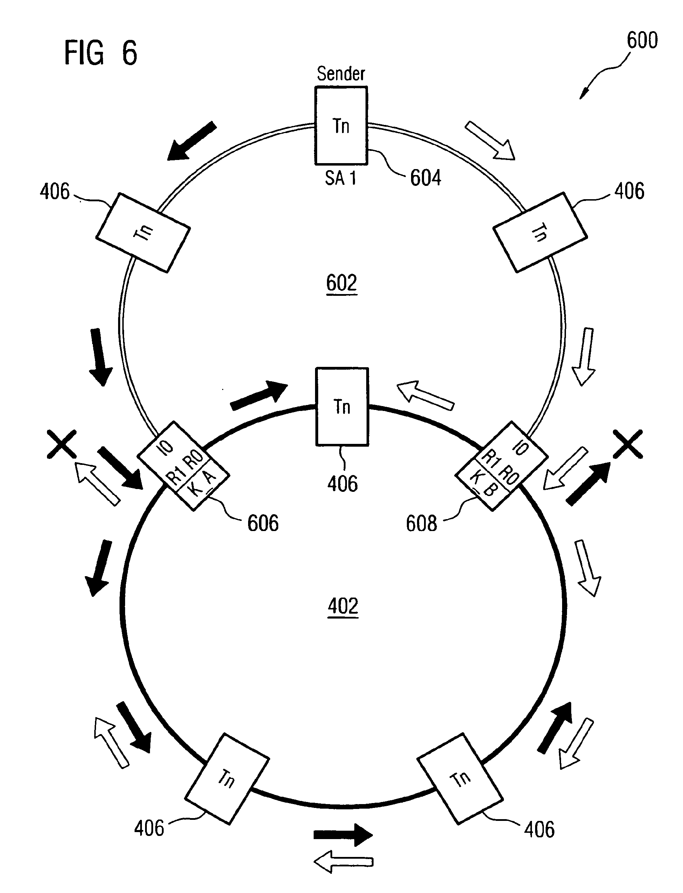

Figur 6 ist eine schematische Ansicht eines Kommunikationssystems 600 mit einem ersten Kommunikationsnetzwerk 402 und einem zweiten Kommunikationsnetzwerk 602. Das Kommunikationsnetzwerk 602 ist girlandenförmig ausgebildet, es bildet also keinen in sich geschlossenen Ring. Auch hier ist wiederum zu betonen, dass für das erste und das zweite Kommunikationsnetzwerk 402 und 602 andere Netzwerkgeometrien anwendbar sind. Zur vereinfachten Darstellung wird hier ein ringförmiges erstes Kommunikationsnetzwerk 402 und ein girlandenförmiges zweites Kommunikationsnetzwerk 602 dargestellt.

Im zweiten Kommunikationsnetzwerk 602 befindet sich der Datensender 604, der Daten an seine beiden benachbarten Netzwerkgeräte 406 aussendet. Die Daten werden über die Kopplungsknoten 606 und 608 an das erste Kommunikationsnetzwerk weitergeleitet. Eine Rückübertragung der Daten in das zweite Kommunikationsnetzwerk 602 wird durch die Kopplungsknoten 606 und 608 verhindert. Die Verhinderung kann beispielsweise dadurch erfolgen, dass für die Quelladresse der Daten in der Datenbank der Kopplungsknoten 606 und 608 die FWC-Bits 0:1 hinterlegt sind, die eine Übertragung der Daten vom zweiten Kommunikationsnetzwerk 602 in das erste Kommunikationsnetzwerk 402 ermögliche. Eine Rückübertragung der Daten vom ersten Kommunikationsnetzwerk 402 in das zweite Kommunikationsnetzwerk 602 wird hingegen durch die FWC-Bits 0:1 verhindert.

Alternativ können in den Datenbanken der Kopplungsknoten 606 und 608 für die Zieladresse der Daten mit den Festlegungsbits festgelegt sein, sodass diese Daten nicht über den Port ausgegeben werden dürfen, der mit dem zweiten Kommunikationsnetzwerk 602 verbunden ist. So wird eine Rückübertragung der Daten vom ersten Kommunikationsnetzwerk 402 zum zweiten Kommunikationsnetzwerk 602 verhindert.

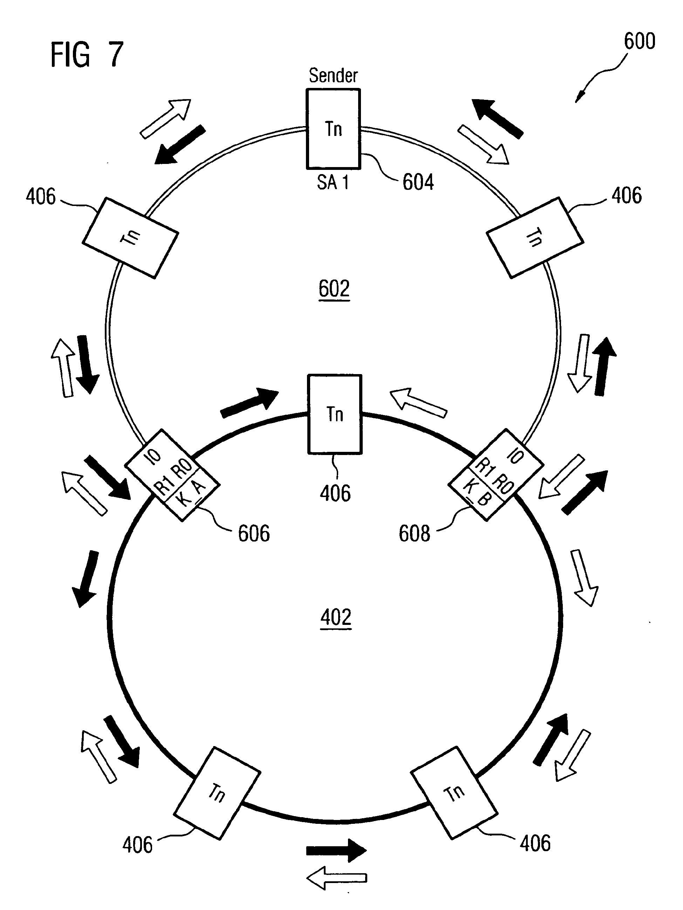

Figur 7 ist eine schematische Ansicht eines Kommunikationssystems mit einem ersten Kommunikationsnetzwerk 402 und einem zweiten Kommunikationsnetzwerk 602. Die beiden Kommunikationsnetzwerke 402 und 602 sind über die Kopplungsknoten 606 und 608 verbunden. Im Gegensatz zur Figur 6 wird hier nun eine Übertragung der Daten, die vom Sender 604 ausgesendet wurden, vom ersten Kommunikationsnetzwerk 402 zum zweiten Kommunikationsnetzwerk 602 ermöglicht. Dies kann beispielsweise dadurch geschehen, dass für die Quelladresse des Senders 604 in den Kopplungsknoten 606 und 608 in der Datenbank die Forward Control Bits 0:0 hinterlegt sind, die eine Rückübertragung der Daten in das zweite Kommunikationsnetzwerk 602 erlauben. Alternativ kann für die Zieladresse der Daten durch die Festlegungsbits in der Datenbank festgelegt sein, dass eine Rückübertragung der Daten in das zweite Kommunikationsnetzwerk 602 möglich ist. So werden auch für ein girlandenförmiges Kommunikationsnetzwerk wie das zweite Kommunikationsnetzwerk 602 zwei redundante Übertragungswege geschaffen.

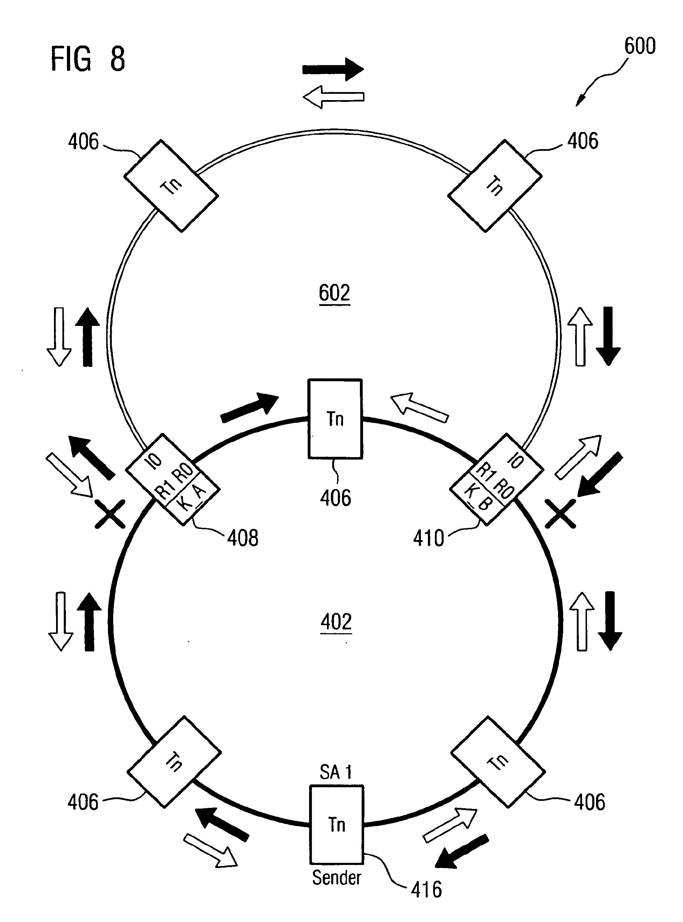

Figur 8 ist eine schematische Ansicht eines Kommunikationssystems 600 mit einem ersten Kommunikationsnetzwerk 402 und einem zweiten Kommunikationsnetzwerk 602. Die Daten werden von einem Sender 416 in dem ersten Kommunikationsnetzwerk 402 in zwei Richtungen ausgesendet. Kopplungsknoten 408 und 410 verbinden das erste Kommunikationsnetzwerk 402 mit dem zweiten Kommunikationsnetzwerk 602. Wenn die vom Sender 416 ausgesendeten Daten die Kopplungsknoten 408 und 410 erreichen, werden die Daten an Netzwerkgeräte 406 des zweiten Kommunikationsnetzwerks 602 weitergeleitet. Eine Rückübertragung der Daten vom zweiten Kommunikationsnetzwerk 602 zum ersten Kommunikationsnetzwerk 402 wird verhindert.

Die Verhinderung kann zum Beispiel durch Forward Control Bits geschehen. Hierfür werden in den Datenbanken der Kopplungsknoten 408 und 410 für die Quelladresse des Senders 416 die Forward Control Bits 10 hinterlegt. Diese Forward Control Bits verhindern, dass die Daten zurück vom zweiten Kommunikationsnetzwerk 602 in das erste Kommunikationsnetzwerk 402 übertragen werden.

Alternativ kann die Verhinderung der Rückübertragung der Daten vom zweiten Kommunikationsnetzwerk 602 zum ersten Kommunikationsnetzwerk 402 durch die Festlegungs-Bits erfolgen. Hierfür werden in den Datenbanken der Kopplungsknoten 408 und 410 für die Zieladresse der Daten 416 bei Empfang über die Ports, die mit dem zweiten Kommunikationsnetzwerk 602 verbunden sind, keine Sendeports zugeordnet. Somit wird eine Übertragung der Daten vom zweiten Kommunikationsnetzwerk 602 zum ersten Kommunikationsnetzwerk 402 verhindert.

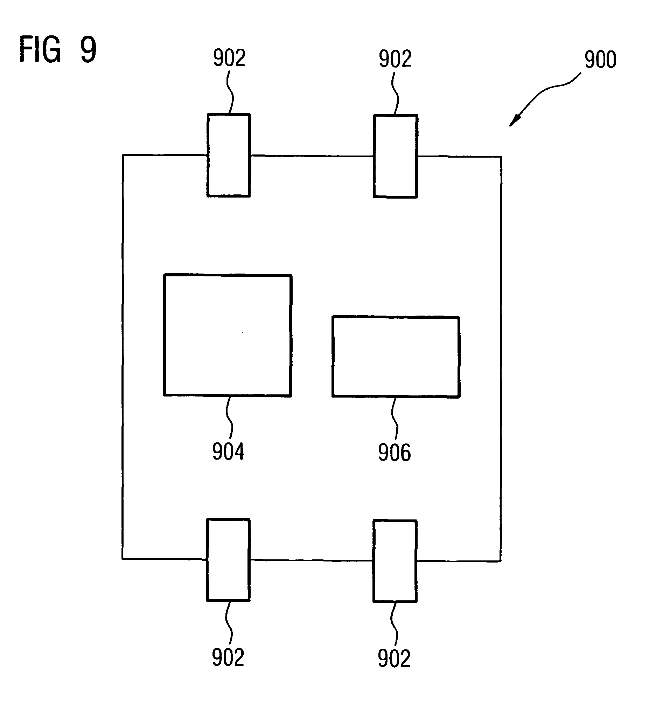

Figur 9 ist ein Blockdiagramm eines Kopplungsknotens 900. Der Kopplungsknoten 900 umfasst mehrere Ports 902. Jeder Port 902 ist zum Empfang und zum Aussenden von Daten geeignet. Außerdem umfasst der Kopplungsknoten 900 ein digitales Speichermedium 904. Auf dem digitalen Speichermedium 904 ist die Datenbank mit dem zweiten Teil der vordefinierten Information gespeichert. Außerdem ist zum digitalen Speichermedium 904 ein Programm mit Instruktionen gespeichert. Das Programm kann vom Prozessor 906 des Kopplungsknotens 900 ausgeführt werden. Bei Ausführung des Programms wird beim Empfang von Daten der Empfangsport registriert und der erste Teil der vordefinierten Information aus den Daten ausgelesen. Der erste Teil der vordefinierten Information wird mit der Datenbank des Kopplungsknotens 900 verglichen und der zweite Teil der vordefinierten Information wird ausgelesen. Der Prozessor 906 ist dazu ausgebildet, bei Ausführung des Programms die Rückübertragung von Daten, die ursprünglich aus dem ersten Kommunikationsnetzwerk stammen, und vom zweiten Kommunikationsnetzwerk empfangen wurden, zurück in das erste Kommunikationsnetzwerk zu verhindern.

### Bezugszeichenliste

- 100: Datenbankeintrag
- 102: Quelladresse
- 104: FWC-Bits
- 200: Kopplungsknoten
- 202: Port
- 204: Port
- 206: Port
- 208: Port
- 300: Datenbankeintrag
- 302: Zieladresse
- 304: Festlegungs-Bits
- 306: Festlegungs-Bits
- 308: Festlegungs-Bits
- 310: Festlegungs-Bits
- 400: Kommunikationssystem
- 402: Kommunikationsnetzwerk
- 404: Kommunikationsnetzwerk
- 406: Netzwerkgerät
- 408: Kopplungsknoten
- 410: Kopplungsknoten
- 412: Kopplungsknoten
- 414: Kopplungsknoten
- 416: Sender
- 600: Kommunikationssystem
- 602: Kommunikationsnetzwerk
- 604: Sender
- 606: Kopplungsknoten
- 608: Kopplungsknoten
- 900: Kopplungsknoten
- 902: Port
- 904: Speichermedium
- 906: Prozessor

## Patentansprüche

1. Verfahren zur redundanten Kommunikation in einem Kommunikationssystem (400; 600),
wobei das Kommunikationssystem mehrere Kommunikationsnetzwerke (402; 404; 602) umfasst,
wobei die Kommunikationsnetzwerke über zumindest einen Kopplungsknoten (408; 410; 412; 414; 606; 608; 900) miteinander verbunden sind,
wobei die Kommunikationsnetzwerke mehrere Netzwerkgeräte (406) umfassen,
wobei das Verfahren die folgenden Schritte umfasst:
- Übertragung von Daten von einem ersten Netzwerkgerät (416; 604) des ersten Kommunikationsnetzwerks zu einem zweiten Netzwerkgerät des zweiten Kommunikationnetzwerks über zumindest einen Kopplungsknoten und/oder von dem ersten Netzwerkgerät zu einem dritten Netzwerkgerät des ersten Kommunikationsnetzwerks, wobei die Übertragung vom ersten zum zweiten Netzwerkgerät und/oder die Übertragung vom ersten zum dritten Netzwerkgerät über zumindest zwei redundante Übertragungswege erfolgt,
**gekennzeichnet durch**
- Verhinderung einer Rückübertragung der Daten vom zweiten zum ersten Kommunikationsnetzwerk bei einer Übertragung vom ersten zum zweiten Netzwerkgerät auf Grund einer vor der Übertragung vordefinierten Information, wobei die vordefinierte Information aus einem ersten Teil und einem zweiten Teil (100; 300) besteht, wobei die Daten den ersten Teil der vordefinierten Information umfassen, und wobei der Kopplungsknoten den zweiten Teil der vordefinierten Information umfasst.

2. Verfahren nach Anspruch 1, wobei der erste Teil der vordefinierten Information von dem zumindest einen Kopplungsknoten gelesen wird.

3. Verfahren nach Anspruch 2, wobei der Kopplungsknoten mehrere Ports (202; 204; 206; 208; 902; 904) umfasst, wobei über jeden der Ports Daten empfangen und gesendet werden können, wobei der zweite Teil der vordefinierten Information sich in einer Datenbank befindet, wobei die Datenbank mehrere Einträge (100) umfasst,
wobei das Verfahren ferner die folgenden Schritte umfasst:
- Empfang von Daten an einem ersten Port,
- auslesen des ersten Teils der vordefinierten Information,
- Ermittlung des zweiten Teils (104) der vordefinierten Information durch Vergleich der Datenbankeinträge mit dem ersten Teil der vordefinierten Information,
- auslesen zumindest eines zweiten Ports zur Weiterleitung der Daten aus dem zweiten Teil der vordefinierten Information, falls der zweite Teil der vordefinierten Information zumindest einen zweiten Port umfasst,
- Weiterleitung der Daten über den zumindest einen zweiten Port, falls der zweite Teil der vordefinierten Information zumindest einen zweiten Port umfasst,
- Verhinderung einer Weiterleitung der Daten, falls der zweite Teil der vordefinierten Information keinen zweiten Port umfasst.

4. Verfahren nach einem der Ansprüche 1 oder 2, wobei der Kopplungsknoten mehrere Ports umfasst, wobei über jeden der Ports Daten empfangen und gesendet werden können, wobei der zweite Teil der vordefinierten Information sich in einer Datenbank befindet, wobei die Datenbank mehrere Einträge umfasst, wobei jeder Eintrag für jeden der Ports keinen oder zumindest einen dazugehörigen Sendeport umfasst, wobei der erste Teil der vordefinierten Information ein Datenziel umfasst,
wobei das Verfahren ferner die folgenden Schritte umfasst:
- Empfang der Daten an einem ersten Port,
- auslesen des Datenziels und Registrierung des ersten Ports,
- Suche in der Datenbank nach einem Datenbankeintrag (300), der mit dem Datenziel und dem ersten Port übereinstimmt,
- auslesen des zumindest einen zu dem ersten Port zugehörigen Sendeports (304; 306; 308; 310) aus der Datenbank, falls der Datenbankeintrag zumindest einen Sendeport umfasst,
- Weiterleitung der Daten über den zumindest einen ausgelesenen Sendeport, falls der Datenbankeintrag zumindest einen Sendeport umfasst,.
- Verhinderung einer Weiterleitung der Daten, falls der Datenbankeintrag keinen Sendeport umfasst.

5. Verfahren nach Anspruch 4, wobei jeder Datenbankeintrag und das Datenziel durch eine Multicast-Adresse oder eine Unicast-Adresse charakterisiert ist.

6. Verfahren nach einem der vorhergehenden Ansprüche, wobei das Kommunikationssystem ein Automatisierungssystem ist, und wobei die Daten Automatisierungsdaten sind.

7. Kopplungsknoten (200; 408; 410; 412; 414; 606; 608; 900) mit mehreren Ports (202; 204; 206; 208; 902), wobei die Ports dazu ausgebildet sind, zumindest ein erstes Kommunikationsnetzwerk (402) eines Kommunikationssystems (400) mit einem zweiten Kommunikationsnetzwerk (404; 602) des Kommunikationssystems zu verbinden, wobei über die Ports Daten aus dem ersten und dem zweiten Kommunikationsnetzwerk empfangen werden können und an das erste und an das zweite Kommunikationsnetzwerke ausgesendet werden können, wobei der Kopplungsknoten Mittel (906) zum Auslesen eines ersten Teils einer vordefinierten Information aus den Daten umfasst,
**dadurch gekennzeichnet, daß**
- der Kopplungsknoten Speichermittel (906) und Auslesemittel (906) zum Speichern und Auslesen eines zweiten Teils der vordefinierten Information umfasst,
- der Kopplungsknoten Verhinderungsmittel (906) umfasst,
- die Verhinderungsmittel dazu ausgebildet sind, in Abhängigkeit von der vordefinierten Information eine Übertragung von empfangenen Daten, die ursprünglich aus dem ersten Kommunikationsnetzwerk stammen und am Kopplungsknoten vom zweiten Kommunikationsnetzwerk empfangen wurden, zurück in das erste Kommunikationsnetzwerk zu verhindern.

8. Kopplungsknoten nach Anspruch 7, wobei der Kopplungsknoten zur Durchführung eines Verfahrens gemäß einem der Ansprüche 1 bis 6 ausgebildet ist.

9. Computerlesbares Speichermedium (904) mit Instruktionen, die bei Ausführung in einem Kopplungsknoten nach einem der Ansprüche 7 oder 8 in einem Kommunikationssystem den Kopplungsknoten zur Ausführung des folgenden Verfahrens veranlassen:
- empfangen von Daten über einen ersten Port,
- registrieren des ersten Ports,
- auslesen eines ersten Teils einer vordefinierten Information aus den empfangenen Daten,
- auslesen eines zweiten Teils der vordefinierten Information aus Speidhermitteln des Kopplungsknotens,
- verhindern einer Übertragung der empfangenen Daten, die ursprünglich aus dem ersten Kommunikationsnetzwerk stammen und am Kopplungsknoten vom zweiten Kommunikationsnetzwerk empfangen wurden, zurück in das erste Kommunikationsnetzwerk auf Grund der vordefinierten Information.

10. Computerlesbares Speichermedium nach Anspruch 9, wobei das computerlesbare Speichermedium zur Durchführung eines Verfahrens gemäß einem der Ansprüche 1 bis 7 ausgebildet ist.

11. Kommunikationssystem (400) mit einem Kopplungsknoten (200; 408; 410; 412; 414) nach einem der Ansprüche 7 oder 8, wobei das Kommunikationssystem zumindest ein erstes (402) und ein zweites Kommunikationsnetzwerk (404; 602) umfasst, wobei der Kopplungsknoten mehrere Ports (202; 204; 206; 208; 902) umfasst, wobei der Kopplungsknoten über die Ports zumindest das erste Kommunikationsnetzwerk mit dem zweiten Kommunikationsnetzwerk des Kommunikationssystems verbindet.

12. Kommunikationssystem nach Anspruch 11, wobei das Kommunikationssystem zur Durchführung eines Verfahrens gemäß einem der Ansprüche 1 bis 6 ausgebildet ist.

## Claims

1. Method for redundant communication in a communication system (400; 600),
wherein the communication system comprises a number of communication networks (402; 404; 602),
wherein the communication networks are connected to each other via at least one node (408; 410; 412; 414; 606; 608; 900),
wherein the communication networks comprise a number of network devices (406),
wherein the method comprises the following steps:
- Transmission of data from the first network device (416; 604) of the first communication network to a second network device of the second communication network via at least one node and/or from the first network device to a third network device of the first communication network, wherein transmission from the first to the second network device and/or transmission from the first to the third network device is undertaken via at least two redundant transmission paths,
**characterised by**
- Prevention of the data being transmitted back from the second to the first communication network during a transmission from the first to the second network device based on information predefined before the transmission, wherein the predefined information consists of a first part and a second part (100; 300), wherein the data comprises the first part of the predefined information and wherein the node comprises the second part of the predefined information.

2. Method in accordance with claim 1, wherein the first part of the predefined information is read from the at least one node.

3. Method in accordance with claim 2, wherein the node comprises a number of ports (202; 204; 206; 208; 902; 904), with data being able to be received and sent by each of the ports, wherein the second part of the predefined information is located in a database, with the database comprising a number of entries (100),
wherein the method further comprises the following steps:
- Receipt of data at a first port,
- Reading out of the first part of the predefined information,
- Determination of the second part (104) of the predefined information by comparing the database entries with the first part of the predefined information,
- Reading out of the least one second port for forwarding the data from the second part of the predefined information if the second part of the predefined information comprises at least one second port,
- Forwarding the data via the least one second port if the second part of the predefined information includes at least one second port,
- Preventing forwarding of the data if the second part of the predefined information does not include a second port.

4. Method in accordance with one of claims 1 or 2, wherein the node includes a number of ports, wherein data is able to be received and sent by each of the ports, wherein the second part of the predefined information is located in a database, wherein the database includes a number of entries, wherein each entry includes for each of the ports no or at least one associated send port, wherein the first part of the predefined information includes a data destination,
wherein the method further comprises the following steps:
- Receipt of the data at a first port,
- Reading out of the data destination and registration of the first port,
- Searching in the database for a database entry (300) matching the data destination and the first port,
- Reading out from the database the at least one send port (304; 306; 308; 310) belonging to the first port if the database entry includes at least one send port,
- Forwarding of the data about the at least one read-out send port if the database entry includes at least one send port,
- Preventing forwarding of the data if the database entry does not include a send port.

5. Method in accordance with claim 4, wherein each database entry and the data destination are **characterized by** a multicast address or a unicast address.

6. Method in accordance with one of the preceding claims, wherein the communication system is an automation system and wherein the data is automation data.

7. Node (200; 408; 410; 412; 414; 606; 608; 900) with a number of ports (202; 204; 206; 208; 902), wherein the ports are embodied to connect at least one first communication network (402) of a communication system (400) to a second communication network (404; 602) of the communication system, wherein data is able to be received via the ports from the first and the second communication networks and able to be sent out to the first and the second communication networks, wherein the node includes means (906) for reading out a first part of predefined information from the data,
**characterised in that**
- the node includes storage means (906) and read-out means (906) for storing and reading out a second part of the predefined information,
- the node includes prevention means (906),
- the prevention means are embodied, depending on the predefined information, for preventing a transmission of received data that originates from the first communication network and is received at the node from the second communication network, back into the first communication network

8. Node in accordance with claim 7, wherein the node is embodied for executing a method in accordance with one of claims 1 to 6.

9. Computer-readable storage medium (904) with instructions which, when executed in a node in accordance with one of claims 7 or 8 in a communication system, cause the node to carry out the following method:
- Receipt of data via a first port,
- Registration of the first port,
- Reading out a first part of predefined information from the received data,
- Reading out a second part of the predefined information from storage means of the node,
- Preventing the received data that originates from the first communication network and has been received at the node from the second communication network, from being transmitted back into the first communication network on the basis of the predefined information.

10. Computer-readable storage medium in accordance with claim 9, wherein the computer-readable storage medium is embodied for carrying out a method in accordance with one of claims 1 to 7.

11. A communication system (400) with a node (200; 408; 410; 412; 414) in accordance with one of claims 7 or 8, wherein the communication system includes at least a first (402) and a second communication network (404; 602), wherein the node includes a number of ports (202; 204; 206; 208; 902), wherein the node connects at least the first communication network to the second communication network of the communication system via the ports.

12. Communication system in accordance with claim 11, wherein the communication system is embodied for carrying out a method in accordance with one of claims 1 to 6.

## Revendications

1. Procédé de communication redondante dans un système ( 400 ; 600 ) de communication,
dans lequel le système de communication comprend plusieurs réseaux ( 402 ; 404 ; 602 ) de communication,
dans lequel les réseaux de communication sont reliés entre eux par au moins un noeud ( 408 ; 410 ; 412 ; 414 ; 606 ; 608 ; 900 ) de couplage,
dans lequel les réseaux de communication comprennent plusieurs appareils ( 406 ) de réseau,
le procédé comprenant des stades de procédé suivante
- on transmet des données d'un premier appareil ( 416 ; 604 ) de réseau du premier réseau de communication à un deuxième appareil de réseau du deuxième réseau de communication par au moins un noeud de couplage et/ou du premier appareil de réseau à un troisième appareil de réseau du premier réseau de communication, la transmission du premier au deuxième appareil de réseau et/ou la transmission du premier au troisième appareil de réseau s'effectuant par au moins deux voies de transmission redondantes,
**caractérisé en ce que**
- on empêche une retransmission des données du deuxième au premier appareil de réseau de communication lors d'une transmission du premier au deuxième appareil de réseau sur la base d'une information définie à l'avance avant la transmission, une information définie à l'avance étant constituée d'une première partie et d'une deuxième partie ( 100 ; 300 ), les données comprenant la première partie de l'information définie à l'avance et le noeud de couplage comprenant la deuxième partie de l'information définie à l'avance.

2. Procédé suivant la revendication 1, dans lequel la première information définie à l'avance est lue par au moins un noeud de couplage.

3. Procédé suivant la revendication 2, dans lequel le noeud de couplage comprend plusieurs accès ( 202 ; 204 ; 206 ; 208 ; 902 ; 904 ), des données pouvant être reçues et émises par chacun des accès, la deuxième partie de l'information définie à l'avance se trouvant dans une base de données, la base de données comprenant plusieurs entrées ( 100 ),
dans lequel le procédé comprend en outre les stades suivants :
- on reçoit des données sur un premier accès,
- on choisit la première partie de l'information définie à l'avance,
- on détermine la deuxième partie (104) de l'information définie à l'avance en comparant les entrées de la base de données à la première partie de l'information définie à l'avance,
- on choisit au moins un deuxième accès pour acheminer les données de la deuxième partie de l'information définie à l'avance, si la deuxième partie de l'information définie à l'avance comprend au moins un deuxième accès,
- on achemine les données par le au moins un deuxième accès si la deuxième partie de l'information définie à l'avance comprend au moins un deuxième accès,
- on empêche un acheminement des données, si la deuxième partie de l'information définie à l'avance ne comprend pas de deuxième accès.

4. Procédé suivant l'une des revendications 1 ou 2, dans lequel le noeud de couplage comprend plusieurs accès des données pouvant être reçues et émises par chacun des accès, la deuxième partie de l'information définie à l'avance se trouvant dans une base de données, la base de données comprenant plusieurs entrées, chaque entrée pour chacun des accès ne comprenant pas d'accès d'émission ou comprenant au moins accès d'émission associé, la première partie de l'information définie à l'avance comprenant une destination de données,
dans lequel le procédé comprend en outre les stades suivants :
- on reçoit les données à un premier accès,
- on choisit la destination des données et on enregistre le premier accès,
- on recherche dans la base de données une entrée ( 300 ) qui coïncide avec la destination de données et le premier accès,
- on choisit le au moins un accès ( 304 ; 306 ; 308 ; 310 ) d'émission associé au premier accès dans la base de données, si l'entrée dans la base de données comprend au moins un accès d'émission,
- on achemine les données par le au moins un accès d'émission qui a été choisi, si l'entrée dans la base de données comprend au moins un accès d'émission,
- on empêche un acheminement des données, si l'entrée dans la base de données ne comprend pas d'accès d'émission.

5. Procédé suivant la revendication 4, dans lequel chaque entrée de la base de données et la destination de données est **caractérisée par** une adresse multicast ou par une adresse unicast.

6. Procédé suivant l'une des revendications précédentes, dans lequel le système de communication est un système d'automatisation et les données sont des données d'automatisation.

7. Noeud ( 200 ; 408 ; 410 ; 412 ; 414 ; 606 ; 608 ; 900 ) de couplage ayant plusieurs accès ( 202 ; 204 ; 206 ; 208 ; 902 ), les accès étant constitués pour relier au moins un premier réseau ( 402 ) de communication d'un système ( 400 ) de communication à un deuxième réseau ( 404 ; 602 ) de communication du système de communication, dans lequel par les accès des données du premier et du deuxième réseaux de communication peuvent être reçues et peuvent être envoyées au premier et au deuxième réseaux de communication, le noeud de couplage comprenant des moyens ( 906 ) pour choisir dans les données une première partie d'une information définie à l'avance,
**caractérisé en ce que**
- le noeud de couplage comprend des moyens ( 906 ) de mémoire et de moyens ( 906 ) de choix pour mémoriser et choisir une deuxième partie de l'information définie à l'avance,
- le noeud de couplage comprend des moyens ( 906 ) d'empêchement,
- les moyens d'empêchement sont constitués pour, en fonction de l'information définie à l'avance, empêcher une transmission de données reçues, qui proviennent à l'origine du premier réseau de communication et qui ont été reçues au noeud de couplage par le deuxième réseau de communication, de revenir dans le premier réseau de communication.

8. Noeuds de couplage suivant la revendication 7, dans lequel le noeud de couplage constitué pour la mise en oeuvre d'un procédé suivant l'une des revendications 1 à 6.

9. Support ( 904 ) de mémoire pouvant être exploité par un ordinateur et ayant des instructions qui, lorsqu'elles sont réalisées dans un noeud de couplage suivant l'une des revendications 7 ou 8 d'un système de communication, font que le noeud de couplage exécute le procédé suivant :
- réception de données par un premier accès,
- enregistrement du premier accès,
- choix d'une première partie d'une information définie à l'avance dans les données reçues,
- choix dans les moyens de mémorisation du noeud de couplage d'une deuxième partie de l'information définie à l'avance,
- empêchement d'une transmission des données reçues, qui proviennent à l'origine du premier réseau de communication et qui ont été reçues au noeud de couplage par le deuxième réseau de communication, de revenir dans le premier réseau de communication sur la base de l'information définie à l'avance.

10. Support de mémoire pouvant être exploité par un ordinateur suivant la revendication 9, dans lequel le support de mémoire pouvant être exploité par un ordinateur est constitué pour la mise en oeuvre d'un procédé suivant l'une des revendication 1 à 7.

11. Système de communication comprenant un noeud ( 200 ; 408 ; 410 ; 412 ; 414 ) de couplage suivant l'une des revendications 7 ou 8, dans lequel le système de communication comprend au moins un premier ( 402 ) et un deuxième réseau ( 404 ) de communication, le noeud de couplage comprenant plusieurs accès ( 202 ; 204 ; 206 ; 208 ; 902 ), le noeud de couplage reliant par les accès au moins le premier réseau de communication au deuxième réseau de communication du système de communication.

12. Système de communication suivant la revendication 11, dans lequel le système de communication est constitué pour la mise en oeuvre d'un procédé suivant l'une des revendications 1 à 6.
